# EUROPEAN PATENT SPECIFICATION

(11) **EP 2 921 650 B1**
(45) Date of publication and mention of the grant of the patent: **04.10.2017**
(21) Application number: 14160874.5
(22) Date of filing: 20.03.2014
(51) Int. Cl.: F01D 9/04, F01D 5/18

(54) **Turbine vane with cooled fillet**
Turbinenschaufel mit gekühlte Hohlkehle
Aube de turbine avec congé de raccordement refroidi

(43) Date of publication of application: 23.09.2015
(73) Proprietor: Ansaldo Energia Switzerland AG, 5401 Baden (CH)
(72) Inventor: Facchinetti, Emanuele, 8046 Zurich (CH); Wagner, Guillaume, 1018 Lausanne (CH); Henze, Marc, 5430 Wettingen (CH); Krueckels, Joerg, 5413 Birmenstorf (CH); Widmer, Marc, 8405 Winterthur (CH)
(74) Representative: Bernotti, Andrea

(56) References cited:
- EP-A2- 1 160 418
- US-A1- 2003 026 689
- US-A1- 2013 315 725

## Description

### Technical field

The present invention relates to a turbine vane, and more particularly to a cooled vane with a fillet interposed between a platform and an airfoil of the vane. Further, it relates to a method for cooling such a vane.

### Background of the disclosure

The thermodynamic efficiency of power generating cycles depends on the maximum temperature of its working fluid which, in the case for example of a gas turbine, is the temperature of the hot gas exiting the combustor. The maximum feasible temperature of the hot gas is limited by combustion emissions as well as by the operating temperature limit of the parts in contact with this hot gas, and on the ability to cool these parts below the hot gas temperature. In particular blades, i.e. rotating blades and vanes (stationary blades), are exposed to high temperature combustion gases, and consequently are subject to high thermal stresses. Methods are known in the art for cooling the vanes and reducing the thermal stresses. Typically high pressure air, discharged from a compressor, is introduced into an interior of an air-cooled vane from a vane root portion. After cooling the vane the cooling gas is discharged from the vane into a hot gas flow path of the gas turbine.

The region of a vane where the airfoil is connected to the platform is highly loaded and often subject to additional stresses due to thermal mismatches and different thermal expansions of the airfoil and the platform. For a smooth transition and to reduce peaks in the stress distribution a rounded transition from platform to airfoil has been suggested. Such rounded transitions or connections are typically called fillet. Document US2013/0315725 discloses a vane with a cooling arrangement according to the preamble of claim 1.

However cooling of fillets is difficult and requires additional cooling gas flow, which can lead to a reduction in power and efficiency.

### Summary of the disclosure

The object of the present disclosure is to propose a vane, which avoids high stresses in the fillet region and assures safe efficient cooling of the fillet as well as efficient use of the cooling gas, i.e. the disclosed vane provides adequate cooling for the platform-to-airfoil transition region in a vane.

According to a first embodiment the vane comprises a platform, and airfoil extending in longitudinal direction away from the platform. A fillet is connecting the platform to the airfoil. The airfoil can extend from the platform to an airfoil tip or to an opposite platform. The airfoil has a pressure side delimited by a pressure side wall, and a suction side delimited by a suction side wall. Pressure side wall and suction side wall join at a leading edge and at a trailing edge. An impingement tube can be inserted into the airfoil delimiting a cooling channel between the impingement tube and the side walls. The vane further comprises a baffle structure positioned adjacent the fillet which follows the inside contour of the fillet and is delimiting a first cooling passage between the fillet and the baffle structure. The inside of the vane, e.g. of the fillet, is the side facing away from the hot gas side during operation of a turbine with such a vane. A first obstruction is arranged on the inside of the airfoil at the connection of the fillet to the side walls for separating the first cooling passage from the cooling channel. This obstruction can further guide the cooling gas away from the airfoil side walls. The impingement tube is arranged inside a leading edge section of the airfoil, and a convective cooling section is arranged inside a trailing edge section of the airfoil. A wall is dividing the convective cooling section into a first convective cooling section adjacent to the platform and into a second convective cooling section extending towards the vane tip, respectively extending towards a platform at the opposite end of the airfoil.

Due to this separation cooling gas which has been used in the cooling channel can be reused for further cooling purposes. To reduce stresses the fillet can have a large curvature in the order of up to the thickness of the airfoil at the root (i.e. connection region to the platform). To minimize stresses due to different thermal expansions during transients in the gas turbine operation the fillet ideally has a constant wall thickness. In case the wall thickness of the airfoil side walls is different from the wall thickness of the platform a continuous change of fillet wall thickness can be advantageous. As a result the inner contour of the fillet can have a bell mouth like shape. Due to the curvature and resulting large surface area of this bellmounth shaped fillet a large amount of cooling gas might be needed for cooling of the fillet. The reuse of the fillet cooling for further cooling of the vane can therefore significantly contribute to a good overall efficiency of the turbine.

It can be advantageous if the fillet cooling is supplied independently from the airfoil cooling. Preferably the fillet cooling gas is reused for cooling the airfoil. With an independent cooling scheme and reuse of the cooing air it is possible to increase the coolant consumption in this region without affecting the airfoil cooling design and without increasing the overall cooling consumption of the vane. In this way the airfoil cooling performance can be independently optimized. The cooling gas can be air which has been compressed by a compressor of a gas turbine if the vane is installed in an air breathing gas turbine. It can be any other gas or mixture of gases. For example it can be a mixture of air and flue gases for a gas turbine with flue gas recirculation into the compressor inlet.

The vane can have a platform at one end of the airfoil and ending with a tip at the other end of the airfoil. In this case the cooling gas is supplied from the side of the platform. The vane can also have a platform on both sides of the platform. In a vane with platforms on both sides the cooling gas can be supplied from both sides or from either side. If the cooling gas is supplied only to one side of a vane with two platforms the vane typically includes a channel or duct in the hollow airfoil for feeding cooling gas from the side with cooling gas supply to the opposite side.

According to another embodiment the vane comprises a second impingement structure adjacent the platform which follows the contour the platform. This second impingement structure delimits a second cooling passage between the platform and the second impingement structure. The impingement structure can partly or completely cover the platform, i.e. the platform is partly completely impingement cooled through the impingement structure.

In one embodiment of the vane cooling gas used to impingement cool the platform in the region of the second cooling passage can flow to the first cooling passage to convectively cool the fillet while passing through the first cooling passage.

In one embodiment of the vane the baffle structure comprises impingement holes for impingement cooling of the fillet.

In a further embodiment of the vane a second obstruction is arranged on the inside of the platform at the connection between the second cooling passage and the first cooling passage for separating the first cooling passage from the second cooling passage. The obstruction avoids a cross flow of cooling gas from the second cooling passage through the first cooling passage which could have a detrimental effect on the impingement cooling in the first passage.

The second obstruction can partly or completely separate the first cooling passage from the second cooling passage.

The cooling gas used for impingement cooling the platform can for example be fed from the second cooling passage to impingement tube of the airfoil for further use.

In one embodiment of the vane the second obstruction spans around the circumference of the fillet. In an alternative embodiment the second obstruction extends around the leading edge and or the trailing edge for shielding the impingement cooling of the filet from a cross flow of cooling gas coming from second cooling passage towards the first cooling passage in the leading edge region and/or trailing edge region of the fillet.

In another embodiment of the vane the second cooling passage has an opening to the first cooling passage such that cooling gas flows from the second cooling passage to first cooling passage. The opening can be a seamless connection of the baffle structure with the second impingement structure. These can even be combined into one structure or in one piece or one plate. The cooling gas leaving the second cooling passage can thus be reused for subsequent convective cooling of the fillet during operation.

In another embodiment of the vane the second cooling passage has an opening and connection such as a flow channel or connecting plenum to the impingement tube such that cooling gas flows from second cooling passage to the impingement tube for subsequent impingement cooling of the airfoil during operation.

In yet another embodiment of the vane the first cooling passage has an opening or flow channel to the impingement tube such that cooling gas flows from first cooling passage into impingement tube for subsequent impingement cooling of the airfoil during operation.

It can further be advantageous if the fillet or fillet region comprises a row of film cooling holes arranged in the fillet wall such that during operation cooling gas from the first cooling passage is used for film cooling of the fillet after impingement cooling. Further or alternatively, the platform can comprise at least one convective cooling hole arranged in the platform such that during operation cooling gas from the second cooling passage is used for convective cooling of the platform after impingement cooling. This convective cooling hole can discharge the cooling gas into the hot gas flow path.

Film cooling of the fillet and convective cooling of the platform can be used to discharge all of the cooling gas flowing into the first cooling passage and into the second cooling passage thereby completely decoupling the airfoil cooling from the platform and fillet cooling. The film cooling holes in the fillet and convective cooling holes in the platform can also be arranged in combination with an opening or flow channel connecting the first cooling passage to the impingement tube of the airfoil such than part of the cooling gas is reused for impingement cooling of the airfoil and part of the cooling gas is used for film cooling and/or convective cooling.

In a further embodiment of the vane the fillet has a curved shape with an outer surface facing the hot gases during operation wherein the curvature is tangentially to the outer surface of the platform at the connection of the filet to the platform and tangentially to the outer surface of the airfoil at the connection the filet to the airfoil.

In yet another embodiment the fillet has wall thickness which is equal to wall thickness of the platform at the connection to platform and which is equal to the wall thickness of the airfoil side walls at the connection to the airfoil side walls to minimize stresses. The wall thickness of the fillet can for example continuously decreases or continuously increases along the extension of the fillet from the platform to the side walls. The wall thickness can for example also change with continuous first order derivative, i.e. the thickness changes continuously without any steps along the extension of the fillet from a connection to the platform to the connection to the side walls.

The rib can further serve to guide the cooling gas in the first passage along the root of the airfoil.

Convective cooling in the first and/or second convective cooling section can be enhanced by turbulator such as for example a pin field and/or cooling ribs.

In a further embodiment a cooling gas feed is connecting the first cooling passage to the first convective cooling section for directly feeding cooling gas from the first cooling passage to first convective cooling section. Thus the cooling gas leaving the first passage is not flowing via the impingement tube into the convective cooling section but directly from the first cooling passage. The pressure of the cooling gas therefore remains higher in the first cooling passage to effectively cool the root section of the airfoil.

Besides the vane a method for cooling a vane is an object of the disclosure.

The disclosed vane allows good cooling of a fillet and reduces stresses in the fillet. Further, it allows the reuse of the cooling gas spent for cooling the fillet.

The vane which is to be cooled by that method has a platform, an airfoil extending in longitudinal direction away from the platform extending form the platform and connected to the platform by a fillet. The airfoil has a pressure side and a suction side with a pressure side wall and a suction side wall, which join at a leading edge and at a trailing edge. An impingement tube is inserted into said airfoil delimiting a cooling channel between the impingement tube and the side walls. The method for cooling such a vane comprises the following steps:
- supplying cooling gas to a baffle structure positioned adjacent the fillet which follows the inside contour of the fillet and delimits a first cooling passage between the fillet and the baffle structure,
- impinging the cooling gas onto the fillet for impingement cooling,
- after impingement guiding the cooling gas leaving the first cooling passage with the help of an obstruction arranged on the inside of the airfoil at the connection of the fillet to the side walls into the impingement tube, and
- impinging the cooling gas on the side walls of the airfoil.

### Brief description of the drawings

The disclosure, its nature as well as its advantages, shall be described in more detail below with the aid of the accompanying schematic drawings. Referring to the drawings:
Fig. 1 shows a perspective view of an exemplary turbine vane;
Fig. 2a, 2b shows bottom view of the foot of the vane from Fig. 1;
Fig. 3 shows an example the cross-section the platform and a cut out of the airfoil at the connection to the platform;
Fig. 4 shows a modified detailed of the platform of Fig. 3;
Fig. 5 shows another example the cross-section the platform and a cut out of the airfoil at the connection to the platform;
Fig. 6 shows another example the cross-section the platform and a cut out of the airfoil at the connection to the platform;
Fig. 7 shows another example the cross-section the platform and a cut out of the airfoil at the connection to the platform;
Fig. 8 shows exemplary cross-section of the airfoil.

### Embodiments of the disclosure

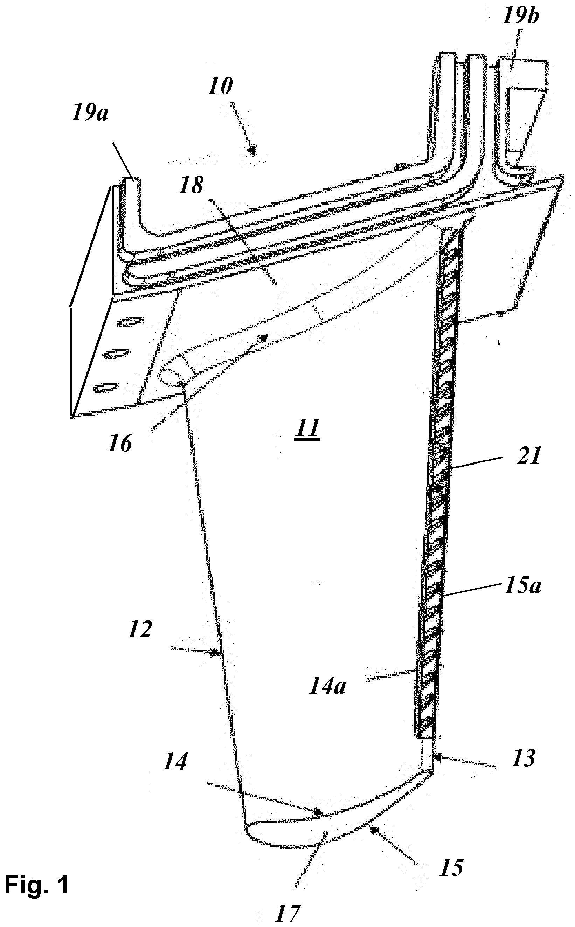

A vane 10 of a turbine according to an exemplary embodiment of the disclosure is shown in Fig. 1. The vane 10 has an airfoil 11 which extends in the longitudinal direction from a platform 18 to a vane tip 17. The longitudinal direction of the airfoil 11 in this context is the direction from platform to tip, respectively from platform to opposite platform of the vane. This direction is typically practically perpendicular to the flow direction of hot gases in the flow path of a turbine. The airfoil 11 has a pressure side 14 and a suction side 15 and also a leading edge 12 and a trailing edge 13. The platform 18 is provided with hook-like fastening elements 19a and 19b on the top. The airfoil 11 merges into the platform 18 with a fillet 16 at a root. At the trailing edge 13, discharge openings 21 for cooling gas are arranged in a distributed manner along said trailing edge 13 and are separated from each other by means of ribs 32 disposed in between. The airfoil 11 is outwardly delimited by a pressure-side wall 14a and a suction-side wall 15a. Film cooling gas holes can be arranged on the surface of the suction-side wall 15a and pressure-side wall 16a (not shown). These can be advantageous in leading edge region of the side walls 14a, 15a

The vane shown in Fig. 1 has an airfoil 11 extending from one platform 18 and ending at a tip 17. Depending on the design and application a vane can comprise two platforms 18 with an airfoil 11 extending from one platform to another platform.

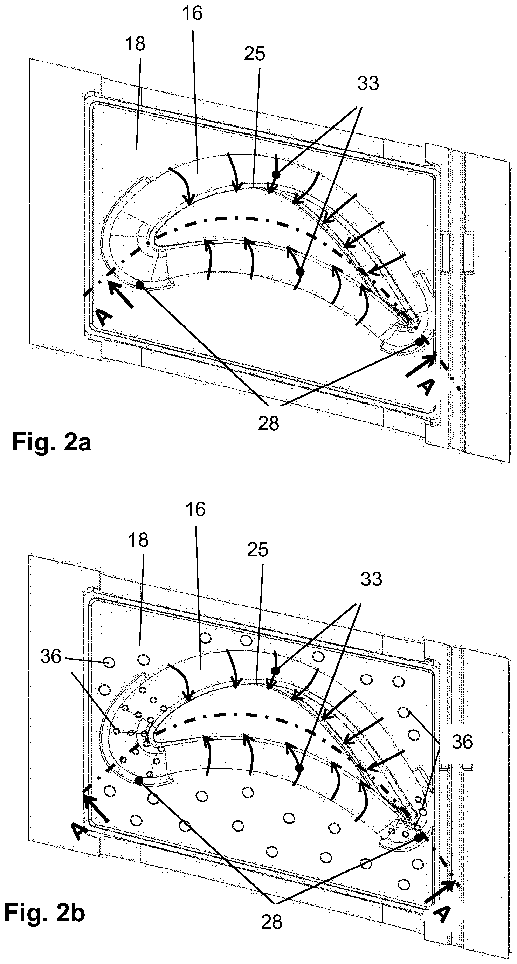

Fig. 2a shows the platform 18 in a top view of the vane in Fig. 1 In the top view of Fig.2a impingement plates, and baffles for guides the cooling gas are omitted to allow a view into the vane. The Fig.2a shows platform 18. The airfoil itself is not visible as it is pointing away from the platform 18 but an opening with the aerodynamic profile of the platform is visible. A curved fillet 16 connecting the platform 18 to the airfoil encircles the profiled vane opening. During operation cooling gas 33 flows from the platform 18 across the fillet following the curvature of the fillet 16. To further guide the cooling gas flow 33 a first obstruction 25 is arranged on the inside of the vane at the connection of the fillet 16 to the airfoil. Second obstructions 28 are arranged on the platform 18 at the connection of the fillet 16 to the platform 18 in the leading edge as well as in a trailing edge region. The second obstructions 28 shield the leading edge and the trailing edge regions of the fillet 16 from a cross flow of cooling gas from the platform 18 during operation.

Fig. 2b is based on Fig. 2a. Here examples for the location of impingement cooling holes 36 are indicated. In this example cooling holes 36 are distributed above the platform and in a leading edge as well as in a trailing edge region of the fillet 16. An effective impingement cooling of the leading edge and trailing edge region of the fillet 16 is enhanced by the second obstructions 28 which shield it from cooling gas 33 flowing from the platform 18 towards the airfoil.

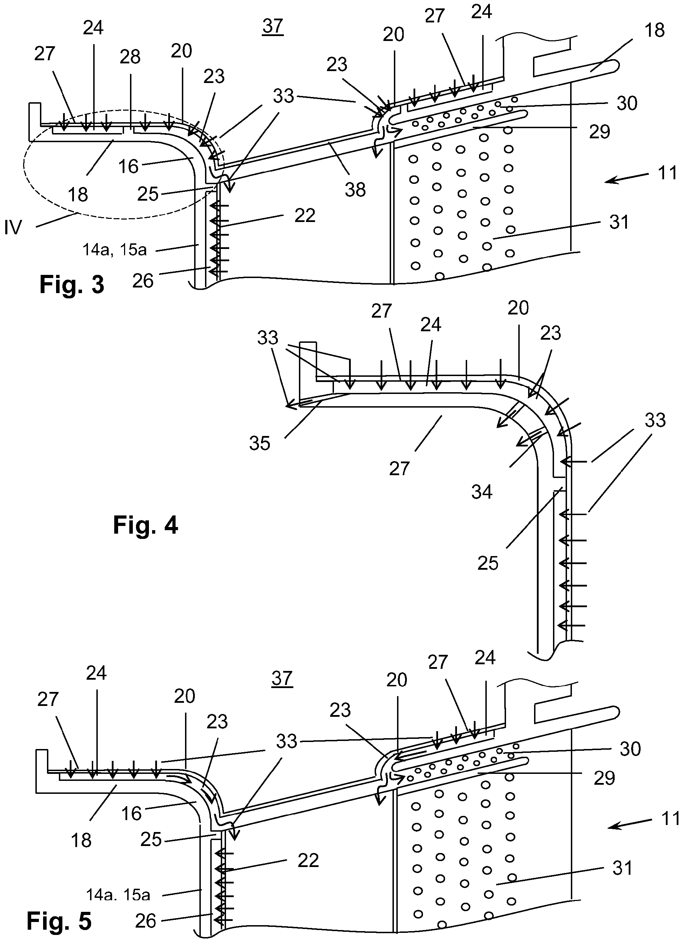

Figs. 3, 5, 6, and 7 show the cut A-A of the vane 10 indicated in Fig.2a, 2b. They show different examples of the platform, fillet- airfoil connection with corresponding cooling schemes. Only a cut-out of the airfoil 11 region close to the platform is shown since a tip region is not subject of the invention. If the vane 10 comprises platforms on both ends of the airfoil 11 these can be designed in according to the same principles shown.

The vane of Fig. 3 comprises a platform 18, an airfoil 11 extending away from the platform 18 into a hot gas flow (during operation). The airfoil 11 is connected to the platform 18 by a fillet 16. The fillet 16 is curved and asymptotic to the platform 18, respectively to the airfoil 11 at the respective connection as can be seen here for the leading edge region.

A baffle structure 20 is positioned adjacent to the fillet 16 and follows the inside contour of the fillet 16. A first cooling passage 23 is arranged between the fillet and the baffle structure 20. In this example the baffle structure 20 is configured as an impingement plate for impingement cooling of the fillet 16 with pressurized cooling gas 33 supplied from a plenum 37 above the baffle structure 20.

An impingement tube 22 is inserted into the airfoil 11 delimiting a cooling channel 26 between the impingement tube 22 and the side walls 14a, 15a. The impingement tube 22 is arranged next to the leading edge of the airfoil 11 allowing an impingement cooling of the side walls 14a, 15a in the leading edge region. After impinging on the side walls 14a, 15a the cooling gas 33 can be used to further cool the airfoil by discharging it to the outer surface of the airfoil through film cooling holes (not shown) or by guiding it through a cooling channel 26 formed by the side walls 14a, 15a and the impingement tube 22 along the side walls 14a, 15a towards the trailing edge of the vane, and thereby convectively cooling the airfoil 11.

Between the first cooling passage 23 and the cooling channel 26 a first obstruction 25 is arranged on the inside of the airfoil 11 at the connection of the fillet 16 to the side walls 14a, 15a. The first obstruction 25 prevents cooling gas 33 from flowing out of the first cooling passage 23 directly into the cooling channel 26 and forces the cooling gas 33 to flow out of an opening of the first cooling passage 23 into the impingement tube 22. Thus the cooling gas 33 can be used twice. A closing plate 38 above the upper end of the impingement tube prevents a direct flow of the cooling gas 33 from plenum 37 into the impingement tube 22.

In this example the vane further comprises a second impingement structure 27 adjacent the platform 18. This second impingement structure 27 is configured as an impingement plate arranged offset and parallel to the platform. A second cooling passage 24 is formed between the platform 18 and the second impingement structure 27. Cooling gas 33 impinges on the platform 18 and then flows along the platform's 18 inner surface in the second cooling passage.

In this example the vane has a second obstruction 28 which is arranged on the inside of the platform 18 at the connection between the second cooling passage 24 and the first cooling passage 23. The second obstruction at least partly separates first cooling passage 23 from the second cooling passage 24 and thereby prevents a cross flow of cooling gas 33 from the second cooling passage 24 in the impingement cooled first cooling passage 23.

The cooling gas 33 leaves the second cooling passage 24 via an opening and can be guided directly to the impingement tube 22 (not shown) or can flow through the sections of the first cooling passage 23 which are not blocked by the second obstruction (not shown here but indicated in Fig. 2a, 2b).

The airfoil region downstream of the impingement tube 22, i.e. in flow direction of hot gases flowing around the vane during operation, can be convectively cooled with the cooling gas 33 leaving the impingement tube 22 or cooling gas directly fed into the space between the side walls 14a, 15a downstream of the impingement tube 22. In this example a first and a second convective cooling section 30, 31 are arranged downstream of the impingement tube 22 in the airfoil 11 for convectively cooling the side walls 14a, 15a. The first convective cooling section 30 is fed with cooling gas coming from the first cooling passage 23 after the cooling gas 33 has cooled the fillet 16. The first convective cooling section 30 is separated from the second convective cooling section 31 by a wall 29 which extends basically parallel to the platform 18 and spans between the pressure side wall 14a and the suction side wall 15a. The second convective cooling section 1 is feed from cooling gas 33 leaving the cooling channel 26 after impingement cooling. In this arrangement cooling gas 33 with a higher pressure level is feed to the first convective cooling section 30 near the platform to better cool this highly loaded region. In the examples shown here the first and second convective cooling sections 30, 31 are configured as pin fields. Instead of pin fields other heat transfer enhancements can be used or depending on the cooling requirements at least part of the side walls can have a smooth inner surface.

Fig. 4 shows a variation of the platform 18 cooling design of the detail IV indicated in Fig. 3. In this example the first cooling passage 23 and second cooling passage 24 are connected and no obstruction is interposed between them. Further, the baffle structure 20 and the second impingement structure 27 are incooperated into one impingement plate following the contour of the platform 18 and around the curvature of the fillet 16.

In this example the cooling gas 33 feed to the first and second cooling passage is further used for film cooling the fillet 16 through film cooling holes 34 and for convectively cooling the upstream end of the platform 18 through convective cooling holes 35.

Fig. 5 is based on the Fig. 3. However, the second cooling passage 24 is connected to the first cooling structure without any interposed obstruction. Further the baffle structure 20 is not configured as an impingement plate but as a guiding plate for guiding cooling gas 33 leaving second cooling passage 24 along the fillet 16 for convective cooling of the fillet 16. In this arrangement the cooling gas first impingement cools the platform, then convectively cools the fillet 16 and is then fed into the impingement tube 22 to finally cool the airfoil 11.

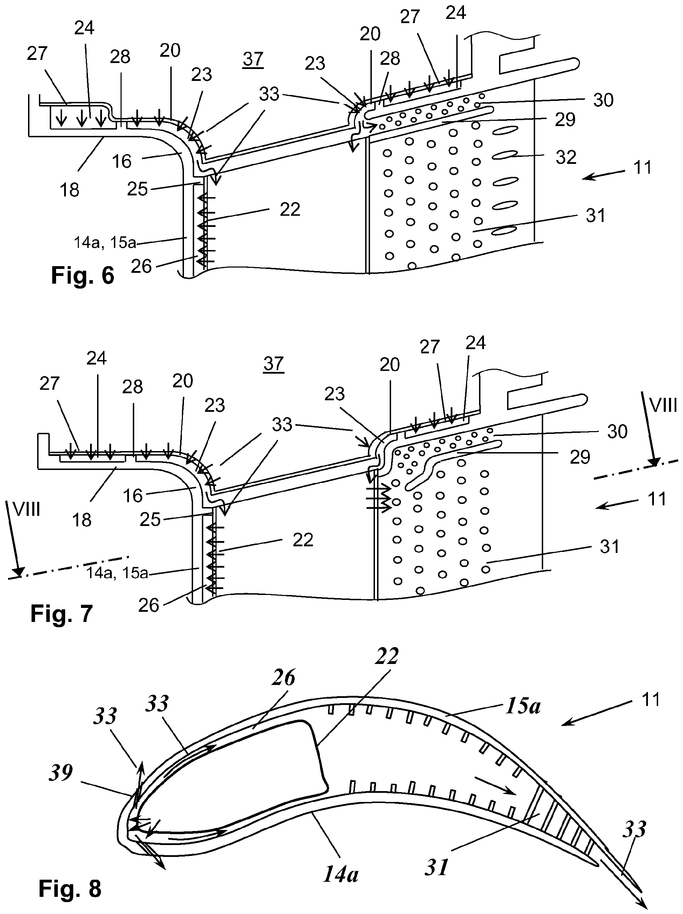

Fig. 6 is also based on the Fig. 3. The cooling design of the platform 18 is modified over the design of the example of Fig. 3. In this example the height of the second cooling passage 24 is changed. It is higher than the first cooling passage 23. An increased cooling passage height can be advantageous to guide large volume flow of cooling gas 33 through the passage. This can be used for example to guide cooling gas 33 which was used to cool the platform 18 in the leading edge region around the second obstruction 28 to the pressure side 14, respectively suction side 15 of the vane where it can be used for convectively cooling the fillet 16:

In Fig. 6 also a modification of the second convective cooling section 31 is shown. In this example a row of ribs 32 arranged at the trailing edge of the airfoil 11. These ribs 32 can be used for further heat transfer enhancement.

Another modification based on Fig. 3 is shown in Fig. 7. In this example the first and second convective cooling section 30, 31 are both supplied with cooling gas from the impingement tube 22 without a direct feed from the first cooling passage 23 into the first convective cooling section 30.

Fig. 8 schematically shows the cross section VIII - VIII of Fig. 7 as a schematic example for cross section of an airfoil 11. The suction-side wall 15a and pressure-side wall 14a delimit a hollow cross section of airfoil 11. Towards the leading edge of the airfoil 11 an impingement tube 22 is arranged inside this hollow cross section. Cooling gas 33 is feed into the impingement tube and impinges on the inside of the suction-side wall 15a and pressure-side wall 14a for cooling. Subsequently, a part of the cooling gas 33 is used for film cooling and discharged via airfoil film cooling holes 39. Another part of the cooling gas 33 flows in the cooling channel 26 between the impingement tube 22 and the suction-side wall 15a respectively pressure-side wall 14a towards the second convective cooling section 31 and is discharge via the trailing edge of the airfoil 11.

### List of designations

- 10: Vane
- 11: Airfoil
- 12: Leading edge
- 13: Trailing edge
- 14: Pressure side
- 14a: Pressure-side wall
- 15: Suction side
- 15a: Suction-side wall
- 16: Fillet
- 17: Blade tip
- 18: Platform
- 19a, b: Fastening element
- 20: Baffle structure
- 21: Discharge opening
- 22: Impingement tube
- 23: First cooling passage
- 24: Second cooling passage
- 25: First obstruction
- 26: Cooling channel
- 27: Second impingement structure
- 28: Second obstruction
- 29: Wall
- 30: First convective cooling field
- 31: Second convective cooling field
- 32: Rib
- 33: Cooling gas
- 34: Film cooling holes
- 35: Convective cooling hole
- 36: Impingement cooling hole
- 37: Plenum
- 38: Closing plate
- 39: Airfoil film cooling holes

## Claims

1. A vane (10) comprising a platform (18), and airfoil (11) extending from said platform (18) and connected to the platform (18) by a fillet (16), wherein the airfoil (11) which extends in longitudinal direction away from the platform (18) has a pressure side (14) and a suction side (15) with a pressure side wall (14a) and a suction side wall (15a), which join at a leading edge (12) and at a trailing edge (13) and an impingement tube (22) inserted into said airfoil (11) delimiting a cooling channel (26) between the impingement tube (22) and the side walls (14a, 15a), wherein the vane (10) comprises a baffle structure (20) positioned adjacent said fillet (16) which follows the inside contour of the fillet (16), a first cooling passage (23) being delimited between the fillet (16) and the baffle structure (20), and wherein a first obstruction (25) is arranged on the inside of the airfoil (11) at the connection of the fillet (16) to the side walls (14a, 15a) for separating the first cooling passage (23) from the cooling channel (26); wherein the impingement tube is arranged in a leading edge section of the airfoil (11), **characterized in that** a convective cooling section (30, 31) is arranged in a trailing edge section of the airfoil wherein the convective cooling section is divided into a first convective cooling section (30) adjacent to the platform and into a second convective cooling section (31) extending towards an opposite end of the airfoil (11) by a wall (29).

2. A vane (10) according to claim 1, **characterized in that** the baffle structure (20) comprises impingement holes for impingement cooling of the fillet (16).

3. A vane (10) according to claim 1 or 2, **characterized in that** the vane (10) comprises a second impingement structure (27) adjacent the platform (18) which follows the contour of the platform (18) delimiting a second cooling passage (24) between the platform (18) and the second impingement structure (27).

4. A vane (10) according to claim 3, **characterized in that** a second obstruction (28) is arranged on the inside of the platform (18) at the connection between the second cooling passage (24) and the first cooling passage (23) for separating the first cooling passage (23) from the second cooling passage (24).

5. A vane (10) according to claim 4, **characterized in that** the second obstruction (28) spans around the circumference of the fillet (16).

6. A vane (10) according to claim 4, **characterized in that** the second obstruction (28) extend around the leading edge and or the trailing edge for shielding the impingement cooling of the filet (16) from a cross flow of cooling gas coming from second cooing passage (24) towards the first cooing passage (23) in the leading edge region and/or trailing edge region of the fillet (16).

7. A vane (10) according to one of the claims 3 to 6, **characterized in that** the second cooling passage (24) has an opening to the first cooling passage (23) such that cooling gas flows from the second cooling passage (24) to first cooling passage (23) for subsequent convective cooling of the fillet (16) during operation.

8. A vane (10) according to one of the claims 3 to 7, **characterized in that** second cooling passage (24) has an opening to the impingement tube (22) via said first colling passage (23) such that cooling gas (33) flows from second cooling passage (24) to the impingement tube (22) for subsequent impingement cooling of the airfoil (11) during operation.

9. A vane (10) according to one of the claims 1 to 8, **characterized in that** the first cooling passage (23) has an opening to the impingement tube (22) such that cooling gas (33) flows from first cooling passage (23) into impingement tube (22) for subsequent impingement cooling of the airfoil (11) during operation.

10. A vane (10) according to one of the claims 1 to 9, **characterized in that** fillet (16) comprises a row of film cooling holes (34) arranged in the fillet wall such that during operation cooling gas (33) is used for film cooling of the fillet (16) after impingement cooling and/or **in that** the platform (18) comprises a convective cooling hole (35) arranged in the platform (18) such that during operation cooling gas (33) is used for convective cooling of the platform (18) after impingement cooling.

11. A vane (10) according to to one of the claims 1 to 10, **characterized in that** the fillet (16) has a curved shape with an outer surface facing the hot gases during operation wherein the curvature is tangentially to the outer surface of the platform (18) at the connection of the filet (16) to the platform (18) and tangentially to the outer surface of the airfoil (11) at the connection of the filet (16) to the airfoil (11).

12. A vane (10) according to one of the claims 1 to 11, **characterized in that** the wall thickness of fillet (16) is equal to wall thickness of the platform (18) at the connection to platform (18) and **in that** the wall thickness of the fillet (16) is equal to the wall thickness of the airfoil side walls (14a, 15a) at the connection to the airfoil side walls (14a, 15a) wherein the wall thickness of the fillet (16) continuously decreases or continuously increases along the extension of the fillet from the platform (18) to the side walls (14a, 15a).

13. A vane (10) according to claim 1, **characterized in that** a cooling gas feed is connecting the first cooling passage (23) to the first convective cooling section (30) for directly feeding cooling gas from the first cooling passage (23) to first convective cooling section (30).

14. A method for cooling a vane (10) comprising a platform (18), an airfoil (11) extending form said platform (18) and connected to the platform (18) by a fillet (16), wherein the airfoil (11) which extends in longitudinal direction away from the platform (18) has a pressure side (14) and a suction side (15) with a pressure side wall (14a) and a suction side wall (15a), which join at a leading edge (12) and at a trailing edge (13) and an impingement tube (22) inserted into said airfoil (11) delimiting a cooling channel (26) between the impingement tube (22) and the side walls (14a, 15a), a first cooling passage (23) being delimited between the fillet (16) and the baffle structure (20), the impingement tube being arranged in a leading edge section of the airfoil (11) and a convective cooling section (30, 31) being arranged in a trailing edge section of the airfoil wherein the convective cooling section is divided into a first convective cooling section (30) adjacent to the platform and into a second convective cooling section (31) extending towards an opposite end of the airfoil (11) by a wall (29) wherein cooling the vane (10) comprises the steps of:
- supplying cooling gas to a baffle structure (20) positioned adjacent the fillet (16) which follows the inside contour of the fillet (16);
- impinging the cooling gas (33) onto the fillet (16) for impingement cooling,
- guiding the cooling gas (33) with the help of an obstruction (25) arranged on the inside of the airfoil (11) at the connection of the fillet (16) to the side walls (14a, 15a) into the impingement tube (22),
- impinging the cooling gas (33) on the side walls (14a, 15a), and
- guiding the cooling gas from the baffle structure (20) to the convective cooling section (30, 31).

## Patentansprüche

1. Leitschaufel (10), umfassend eine Plattform (18) und ein Schaufelblatt (11), das sich von der Plattform (18) erstreckt und durch eine Ausrundung (16) mit der Plattform (18) verbunden ist, wobei das sich in Längsrichtung von der Plattform (18) weg erstreckende Schaufelblatt (11) eine Druckseite (14) und eine Saugseite (15) mit einer Druckseitenwand (14a) und einer Saugseitenwand (15a) aufweist, die sich an einer Vorderkante (12) und an einer Hinterkante (13) miteinander verbinden, wobei ein in das Schaufelblatt (11) eingefügtes Prallrohr (22) einen Kühlkanal (26) zwischen dem Prallrohr (22) und den Seitenwänden (14a, 15a) begrenzt und die Leitschaufel (10) eine Prallflächenstruktur (20) aufweist, die der Ausrundung (16) benachbart angeordnet ist und der innenseitigen Kontur der Ausrundung (16) folgt, wobei zwischen der Ausrundung (16) und der Prallflächenstruktur (20) ein erster Kühldurchgang (23) abgegrenzt wird und an der Innenseite des Schaufelblatts (11) an der Verbindung der Ausrundung (16) mit den Seitenwänden (14a, 15a) ein erstes Hindernis (25) vorgesehen ist, so dass der erste Kühldurchgang (23) von dem Kühlkanal (26) getrennt wird; wobei das Prallrohr in einem Vorderkantenabschnitt des Schaufelblatts (11) angeordnet ist, **gekennzeichnet dadurch, dass** in einem Hinterkantenabschnitt des Schaufelblatts ein Konvektionskühlungsabschnitt (30, 31) vorgesehen ist, der durch eine Wand (29) in einen ersten Konvektionskühlungsabschnitt (30) benachbart zu der Plattform und einen zweiten Konvektionskühlungsabschnitt (31), der sich in Richtung eines entgegengesetzten Endes des Schaufelblatts (11) erstreckt, unterteilt ist.

2. Leitschaufel (10) nach Anspruch 1, **gekennzeichnet dadurch, dass** die Prallflächenstruktur (20) Prallkühlungsöffnungen zur Prallkühlung der Ausrundung (16) umfasst.

3. Leitschaufel (10) nach Anspruch 1 oder 2, **gekennzeichnet dadurch, dass** die Leitschaufel (10) eine zweite Prallflächenstruktur (27) benachbart der Plattform (18) umfasst, die der Kontur der Plattform (18) folgt und zwischen der Plattform (18) und der zweiten Prallflächenstruktur (27) einen zweiten Kühldurchgang (24) abgrenzt.

4. Leitschaufel (10) nach Anspruch 3, **gekennzeichnet dadurch, dass** an der Innenseite der Plattform (18) an der Verbindung zwischen dem zweiten Kühldurchgang (24) und dem ersten Kühldurchgang (23) ein zweites Hindernis (28) vorgesehen ist, so dass der erste Kühldurchgang (23) von dem ein zweiten Kühldurchgang (24) getrennt wird.

5. Leitschaufel (10) nach Anspruch 4, **gekennzeichnet dadurch, dass** das zweite Hindernis (28) den Umfang der Ausrundung (16) umspannt.

6. Leitschaufel (10) nach Anspruch 4, **gekennzeichnet dadurch, dass** sich das zweite Hindernis (28) um die Vorderkante und/oder die Hinterkante erstreckt, um die Prallkühlung der Ausrundung (16) von einer Querströmung des Kühlgases abzuschirmen, das von dem zweiten Kühldurchgang (24) zu dem ersten Kühldurchgang (23) im Vorderkantenbereich und/oder Hinterkantenbereich der Ausrundung (16) strömt.

7. Leitschaufel (10) nach einem der Ansprüche 3 bis 6, **gekennzeichnet dadurch, dass** der zweite Kühldurchgang (24) eine Öffnung zu dem ersten Kühldurchgang (23) aufweist, so dass während des Betriebs Kühlgas zur anschließenden Konvektionskühlung der Ausrundung (16) von dem zweiten Kühldurchgang (24) zu dem ersten Kühldurchgang (23) strömt.

8. Leitschaufel (10) nach einem der Ansprüche 3 bis 7, **gekennzeichnet dadurch, dass** der zweite Kühldurchgang (24) durch den ersten Kühldurchgang (23) eine Öffnung zu dem Prallrohr (22) aufweist, so dass das Kühlgas (33) zur anschließenden Prallkühlung des Schaufelblatts (11) während des Betriebs von dem zweiten Kühldurchgang (24) zu dem Prallrohr (22) strömt.

9. Leitschaufel (10) nach einem der Ansprüche 1 bis 8, **gekennzeichnet dadurch, dass** der erste Kühldurchgang (23) eine Öffnung zu dem Prallrohr (22) aufweist, so dass das Kühlgas (33) zur anschließenden Prallkühlung des Schaufelblatts (11) während des Betriebs von dem ersten Kühldurchgang (23) in das Prallrohr (22) strömt.

10. Leitschaufel (10) nach einem der Ansprüche 1 bis 9, **gekennzeichnet dadurch, dass** die Ausrundung (16) eine in der Ausrundungswand angeordnete Reihe von Filmkühlungsöffnungen (34) aufweist, so dass während des Betriebs nach der Prallkühlung Kühlgas (33) zur Filmkühlung der Ausrundung (16) verwendet wird und/oder dadurch dass die Plattform (18) eine in der Plattform (18) ausgebildete Konvektionskühlungsöffnung (35) aufweist, so dass während des Betriebs nach der Prallkühlung Kühlgas (33) zur Konvektionskühlung der Plattform (18) verwendet wird.

11. Leitschaufel (10) nach einem der Ansprüche 1 bis 10, **gekennzeichnet dadurch, dass** die Ausrundung (16) eine gewölbte Form aufweist, mit einer Außenfläche, die den Heißgasen während des Betriebs zugewandt ist. wobei die Wölbung an der Verbindung der Ausrundung (16) mit der Plattform (18) tangential zu der Außenfläche der Plattform (18) verläuft und an der Verbindung der Ausrundung (16) mit dem Schaufelblatt (11) tangential zu der Außenfläche des Schaufelblatts (11).

12. Leitschaufel (10) nach einem der Ansprüche 1 bis 11, **gekennzeichnet dadurch, dass** die Wanddicke der Ausrundung (16) an der Verbindung mit der Plattform (18) gleich der Wanddicke der Plattform (18) ist und dass die Wanddicke der Ausrundung (16) an der Verbindung mit den Schaufelblattseitenwänden (14a, 15a) gleich der Wanddicke der Schaufelblattseitenwände (14a, 15a) ist, wobei die Wanddicke der Ausrundung (16) entlang der Ausdehnung der Ausrundung von der Plattform (18) zu den Seitenwänden (14a, 15a) stetig abnimmt oder stetig zunimmt.

13. Leitschaufel (10) nach Anspruch 1, **gekennzeichnet dadurch, dass** der erste Kühldurchgang (23) durch eine Kühlgaszuführung mit dem ersten Konvektionskühlungsabschnitt (30) verbunden ist, so dass Kühlgas direkt von dem ersten Kühldurchgang (23) zu dem ersten Konvektionskühlungsabschnitt (30) geleitet wird.

14. Verfahren zur Kühlung einer Leitschaufel (10), umfassend eine Plattform (18), ein Schaufelblatt (11), das sich von der Plattform (18) erstreckt und durch eine Ausrundung (16) mit der Plattform (18) verbunden ist, wobei das sich in Längsrichtung von der Plattform (18) weg erstreckende Schaufelblatt (11) eine Druckseite (14) und eine Saugseite (15) mit einer Druckseitenwand (14a) und einer Saugseitenwand (15a) aufweist, die sich an einer Vorderkante (12) und an einer Hinterkante (13) miteinander verbinden, wobei ein in das Schaufelblatt (11) eingefügtes Prallrohr (22) einen Kühlkanal (26) zwischen dem Prallrohr (22) und den Seitenwänden (14a, 15a) begrenzt, ein erster Kühldurchgang (23) zwischen der Ausrundung (16) und der Prallflächenstruktur (20) begrenzt wird, das Prallrohr in einem Vorderkantenabschnitt des Schaufelblatts (11) angeordnet ist und ein Konvektionskühlungsabschnitt (30, 31) in einem Hinterkantenbereich des Schaufelblatts angeordnet ist, wobei der Konvektionskühlungsabschnitt durch eine Wand (29) in einen ersten Konvektionskühlungsabschnitt (30) benachbart zu der Plattform und einen zweiten Konvektionskühlungsabschnitt (31), der sich in Richtung eines entgegengesetzten Endes des Schaufelblatts (11) erstreckt, unterteilt ist, wobei die Kühlung der Leitschaufel (10) folgende Schritte umfasst:
- Zuführen von Kühlgas (33) zu einer Prallflächenstruktur (20), die benachbart der Ausrundung (16) angeordnet ist und der innenseitigen Kontur der Ausrundung (16) folgt;
- Beaufschlagen der Ausrundung (16) mit dem Kühlgas (33) zur Prallkühlung,
- Leiten des Kühlgases (33) mithilfe eines an der Innenseite des Schaufelblatts (11) an der Verbindung der Ausrundung (16) mit den Seitenwänden (14a, 15a) angeordneten Hindernisses (25) in das Prallrohr (22),
- Beaufschlagen der Seitenwände (14a, 15a) mit dem Kühlgas (33) und
- Leiten des Kühlgases von der Prallflächenstruktur (20) zum Konvektionskühlungsabschnitt (30, 31).

## Revendications

1. Aube (10) comprenant une plateforme (18) et une surface portante (11) s'étendant à partir de ladite plateforme (18) et raccordée à la plateforme (18) par un congé de raccordement (16), dans laquelle la surface portante (11) qui s'étend dans la direction longitudinale à distance de la plateforme (18) a un côté de pression (14) et un côté d'aspiration (15) avec une paroi latérale de pression (14a) et une paroi latérale d'aspiration (15a), qui s'assemblent au niveau d'un bord d'attaque (12) et au niveau d'un bord de fuite (13) et un tube de refroidissement par contact (22) inséré dans ladite surface portante (11) délimitant un canal de refroidissement (26) entre le tube de refroidissement par contact (22) et les parois latérales (14a, 15a), dans laquelle l'aube (10) comprend une structure de déflecteur (20) positionnée de manière adjacente audit congé de raccordement (16) qui suit le contour intérieur du congé de raccordement (16),
un premier passage de refroidissement (23) étant délimité entre le congé de raccordement (16) et la structure de déflecteur (20) et dans lequel une première obstruction (25) est agencée à l'intérieur de la surface portante (11) au niveau du raccordement du congé de raccordement (16) avec les parois latérales (14a, 15a) pour séparer le premier passage de refroidissement (23) du canal de refroidissement (26) ; dans lequel :
le tube de refroidissement par contact est agencé dans une section de bord d'attaque de la surface portante (11),
**caractérisée en ce qu'**une section de refroidissement par convection (30, 31) est agencée dans une section de bord de fuite de la surface portante, dans laquelle la section de refroidissement par convection est divisée en une première section de refroidissement par convection (30) adjacente à plateforme et en une seconde section de refroidissement par convection (31) s'étendant vers une extrémité opposée de la surface portante (11) par une paroi (29).

2. Aube (10) selon la revendication 1, **caractérisée en ce que** la structure de déflecteur (20) comprend des trous de refroidissement par contact pour le refroidissement par contact du congé de raccordement (16).

3. Aube (10) selon la revendication 1 ou 2, **caractérisée en ce que** l'aube (10) comprend une seconde structure de refroidissement par contact (27) adjacente à la plateforme (18) qui suit le contour de la plateforme (18), délimitant un second passage de refroidissement (24) entre la plateforme (18) et la seconde structure de refroidissement par contact (27).

4. Aube (10) selon la revendication 3, **caractérisée en ce qu'**une seconde obstruction (28) est agencée à l'intérieur de la plateforme (18) au niveau du raccordement entre le second passage de refroidissement (24) et le premier passage de refroidissement (23) pour séparer le premier passage de refroidissement (23) du second passage de refroidissement (24).

5. Aube (10) selon la revendication 4, **caractérisée en ce que** la seconde obstruction (28) s'étend autour de la circonférence du congé de raccordement (16).

6. Aube (10) selon la revendication 4, **caractérisée en ce que** la seconde obstruction (28) s'étend autour du bord d'attaque et/ou du bord de fuite pour protéger le refroidissement par contact du congé de raccordement (16) contre un écoulement transversal de gaz de refroidissement allant du second passage de refroidissement (24) vers le premier passage de refroidissement (23) dans la région de bord d'attaque et/ou la région de bord de fuite du congé de raccordement (16).

7. Aube (10) selon l'une des revendications 3 à 6, **caractérisée en ce que** le second passage de refroidissement (24) a une ouverture sur le premier passage de refroidissement (23) de sorte que le gaz de refroidissement s'écoule du second passage de refroidissement (24) au premier passage de refroidissement (23) pour le refroidissement par convection consécutif du congé de raccordement (16) pendant le fonctionnement.

8. Aube (10) selon l'une des revendications 3 à 7, **caractérisée en ce que** le second passage de refroidissement (24) a une ouverture sur le tube de refroidissement par contact (22) via ledit premier passage de refroidissement (23) de sorte que le gaz de refroidissement (33) s'écoule du second passage de refroidissement (24) jusqu'au tube de refroidissement par contact (22) pour le refroidissement par contact consécutif de la surface portante (11) pendant le fonctionnement.

9. Aube (10) selon l'une des revendications 1 à 8, **caractérisée en ce que** le premier passage de refroidissement (23) a une ouverture sur le tube de refroidissement par contact (22) de sorte que le gaz de refroidissement (33) s'écoule du premier passage de refroidissement (23) dans le tube de refroidissement par contact (22) pour le refroidissement par contact consécutif de la surface portante (11) pendant le fonctionnement.

10. Aube (10) selon l'une des revendications 1 à 9, **caractérisée en ce que** le congé de raccordement (16) comprend une rangée de trous de refroidissement de film (34) agencée dans la paroi de congé de raccordement de sorte que pendant le fonctionnement, le gaz de refroidissement (33) est utilisé pour le refroidissement par film du congé de raccordement (16) après le refroidissement par contact et/ou **en ce que** la plateforme (18) comprend un trou de refroidissement par convection (35) agencé dans la plateforme (18), de sorte que pendant le fonctionnement, le gaz de refroidissement (33) est utilisé pour le refroidissement par convection de la plateforme (18) après le refroidissement par contact.

11. Aube (10) selon l'une des revendications 1 à 10, **caractérisée en ce que** le congé de raccordement (16) a une forme incurvée avec une surface externe faisant face aux gaz chauds pendant le fonctionnement, dans laquelle la courbure est tangentielle par rapport à la surface externe de la plateforme (18) au niveau du raccordement du congé de raccordement (16) avec la plateforme (18) et tangentielle par rapport à la surface externe de la surface portante (11) au niveau du raccordement du congé de raccordement (16) avec la surface portante (11).

12. Aube (10) selon l'une des revendications 1 à 11, **caractérisée en ce que** l'épaisseur de paroi du congé de raccordement (16) est égale à l'épaisseur de paroi de la plateforme (18) au niveau du raccordement avec la plateforme (18) et **en ce que** l'épaisseur de paroi du congé de raccordement (16) est égale à l'épaisseur de paroi des parois latérales de surface portante (14a, 15a) au niveau du raccordement avec les parois latérales de surface portante (14a, 15a), dans laquelle l'épaisseur de paroi du congé de raccordement (16) diminue de manière continue ou augmente, de manière continue, le long de l'extension du congé de raccordement, de la plateforme (18) aux parois latérales (14a, 15a).

13. Aube (10) selon la revendication 1, **caractérisée en ce qu'**une alimentation en gaz de refroidissement raccorde le premier passage de refroidissement (23) à la première section de refroidissement par convection (30) pour amener directement le gaz de refroidissement du premier passage de refroidissement (23) à la première section de refroidissement par convection (30).

14. Procédé pour refroidir une aube (10) comprenant une plateforme (18), une surface portante (11) s'étendant à partir de ladite plateforme (18) et raccordée à la plateforme (18) par un congé de raccordement (16), dans lequel la surface portante (11) qui s'étend dans la direction longitudinale à distance de la plateforme (18), a un côté de pression (14) et un côté d'aspiration (15) avec une paroi latérale de pression (14a) et une paroi latérale d'aspiration (15a), qui s'assemblent au niveau d'un bord d'attaque (12) et d'un bord de fuite (13) et un tube de refroidissement par contact (22) inséré dans ladite surface portante (11) délimitant un canal de refroidissement (26) entre le tube de refroidissement par contact (22) et les parois latérales (14a, 15a), un premier passage de refroidissement (23) étant délimité entre le congé de raccordement (16) et la structure de déflecteur (20), le tube de refroidissement par contact étant agencé dans une section de bord d'attaque de la surface portante (11) et une section de refroidissement par convection (30, 31) étant agencée dans une section de bord de fuite de la surface portante, dans lequel la section de refroidissement par convection est divisée en une première section de refroidissement par convection (30) adjacente à la plateforme et en une seconde section de refroidissement par convection (31) s'étendant vers une extrémité opposée de la surface portante (11) par une paroi (29), dans lequel le refroidissement de l'aube (10) comprend les étapes consistant à :
amener le gaz de refroidissement à une structure de déflecteur (20) positionnée de manière adjacente au congé de raccordement (16) qui suit le contour intérieur du congé de raccordement (16) ;
refroidir par contact le congé de raccordement (16) avec le gaz de refroidissement (33), pour le refroidissement par contact,
guider le gaz de refroidissement (33) à l'aide d'une obstruction (25) agencée à l'intérieur de la surface portante (11) au niveau du raccordement du congé de raccordement (16) avec les parois latérales (14a, 15a) dans le tube de refroidissement par contact (22),
refroidir par contact les parois latérales (14a, 15a) avec le gaz de refroidissement (33), et
guider le gaz de refroidissement de la structure de déflecteur (20) à la section de refroidissement par convection (30, 31).
